# DEMANDE DE BREVET EUROPEEN

(11) **EP 0 832 570 A1**
(43) Date de publication de la demande: **01.04.1998**
(21) Numéro de dépôt: 97402128.9
(22) Date de dépôt: 12.09.1997
(51) Int. Cl.: A23L 3/10, A23L 3/12, A47J 27/18

(54) **Procédé et installation de cuisson d'aliments sous vide pour cuisine centrale et industrie agro-alimentaire**

(30) Priorité: 13.09.1996 FR 9611215
(71) Demandeur: TECHNYFORM PRODUCTIONS, 18390 Saint-Germain-Du-Puy (FR)
(72) Inventeur: Voisine, Jean-Claude, 18000 Bourges (FR)
(74) Mandataire: Becker, Philippe

(57) **Abrégé**

L'invention vise à réaliser une cuisson centralisée d'utilisation automatisée et précise, dans une large gamme de température. L'installation comporte au moins une cuve de cuisson (1), un circuit en boucle (I) de recyclage du fluide cuisson, un échangeur (8) disposé sur ce circuit en boucle (I), une canalisation (2) de fluide de cuisson chauffée à la température supérieure et une canalisation (3) de fluide chauffée à la température intermédiaire. Un circuit de régulation (Il) de l'échangeur thermique (8) est alimenté par le fluide de température supérieure et le fluide de température inférieure, cette alimentation étant modulée suivant l'ouverture d'électrovannes (EV1, EV5, EV2, EV8). Au moins trois cuves (5, 6, 7) fournissent le fluide aux températures supérieure, intermédiaire, et inférieure prédéterminées au circuit en boucle (I) pour les cuves de température supérieure et intermédiaire (5, 6) par ouverture modulée d'électrovannes (EV4, EV3, EV7) et au circuit de régulation (Il) pour les cuves de température supérieure et inférieure (5, 7). Des moyens de contrôle (9 à 13) sont prévus dans le circuit de recyclage (I) et dans la cuve de cuisson (1) pour gérer la cuisson et le refroidissement des aliments sous vide.

## Description

La présente invention se rapporte au domaine de la cuisson d'aliments sous vide pour les cuisines centrales et industries agro-alimentaire, c'est-à-dire pour des installations de cuisson à haute capacité en terme de quantité de produits débités.

La cuisson de produits alimentaires emballés sous vide est connue de l'homme de l'art. Pour résumer, les produits sont portés à une température prédéterminée pendant une durée également prédéterminée, puis sont soumis à un refroidissement lent, pendant une durée prédéterminée.

Les installations connues pour appliquer ce principe à la cuisson de grandes quantités de produits impliquent l'utilisation de systèmes lourds, complexes, peu modulables, imprécis et onéreux pour la distribution des agents de cuisson et de refroidissement, ainsi que le contrôle en débit et en température de ces agents. Une telle installation est décrite par exemple dans le brevet EP-0334782.

La présente invention vise à réaliser une installation d'utilisation aisée, automatisée, capable d'offrir des températures de cuisson et de refroidissement avec une très grande précision et de fournir une très large gamme de capacité de cuisson.

Pour atteindre ces objectifs, l'invention propose la mise en place de circuits fermés de fluides chauds ayant des températures différentes, ces circuits ayant un accès commun à un circuit de recyclage du contenu de la cuve de cuisson, et d'un échangeur, opérant soit avec le fluide de plus haute température soit à l'aide d'un fluide de basse température, par exemple proche ou égale à 0°C, pour réguler la température du fluide recyclé et donc celle de la cuve.

Plus précisément, la présente invention a pour objet un procédé de cuisson d'aliments sous vide pour cuisine centrale et industrie agro-alimentaire, comportant des étapes de chargement des aliments dans au moins une cuve de cuisson, de remplissage de la cuve par un fluide de cuisson, de cuisson et de refroidissement des aliments, suivies d'étapes d'évacuation du fluide et de déchargement des aliments cuits et refroidis. Ce procédé est caractérisé en ce qu'il consiste à recycler en circuit fermé le fluide de cuisson provenant, suivant une modulation prédéterminée, d'au moins deux circuits délivrant ce fluide à des températures différentes dont l'une est une température supérieure et l'autre une température intermédiaire, à réaliser un échange de chaleur entre le fluide de cuisson et un fluide de régulation, en ce que le fluide de régulation provient, suivant une modulation prédéterminée, de deux circuits dont l'un fournit le fluide à une température inférieure et l'autre foumit le fluide à la température supérieure, en ce que le fluide de cuisson est contrôlé en température, en pression et en niveau, et en ce que les étapes de cuisson et de refroidissement sont commandées et contrôlées automatiquement par gestion informatique.

L'invention permet d'éviter la consommation de fluide grâce à ses circuits fermés, permet d'obtenir une cuisson au degré près par la modulation en température réalisée par l'utilisation optimisée de sources de températures différentes et d'un échangeur adapté, et d'obtenir dans une même unité la cuisson et le refroidissement des aliments traités, prêts à être conservés.

L'invention concerne également une installation de cuisson d'aliments sous vide pour la mise en oeuvre de ce procédé.

Selon une forme de réalisation particulière, l'installation selon l'invention est réalisée pour permettre le fonctionnement automatique d'un nombre de cuves adapté à la capacité de cuisson souhaitée.

Selon des caractéristiques préférées, il est prévu des moyens de contrôle et de sécurité afin de pallier aux incidents susceptibles de se produire dans la cuve, et des moyens d'alarme adaptés en cas de défauts identifiés.

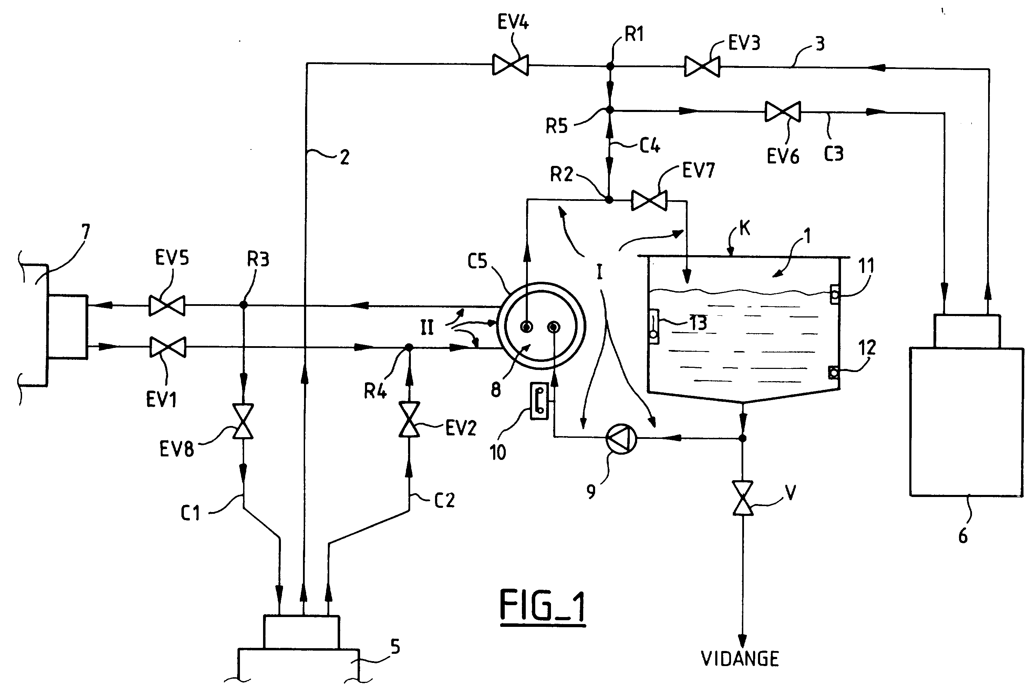

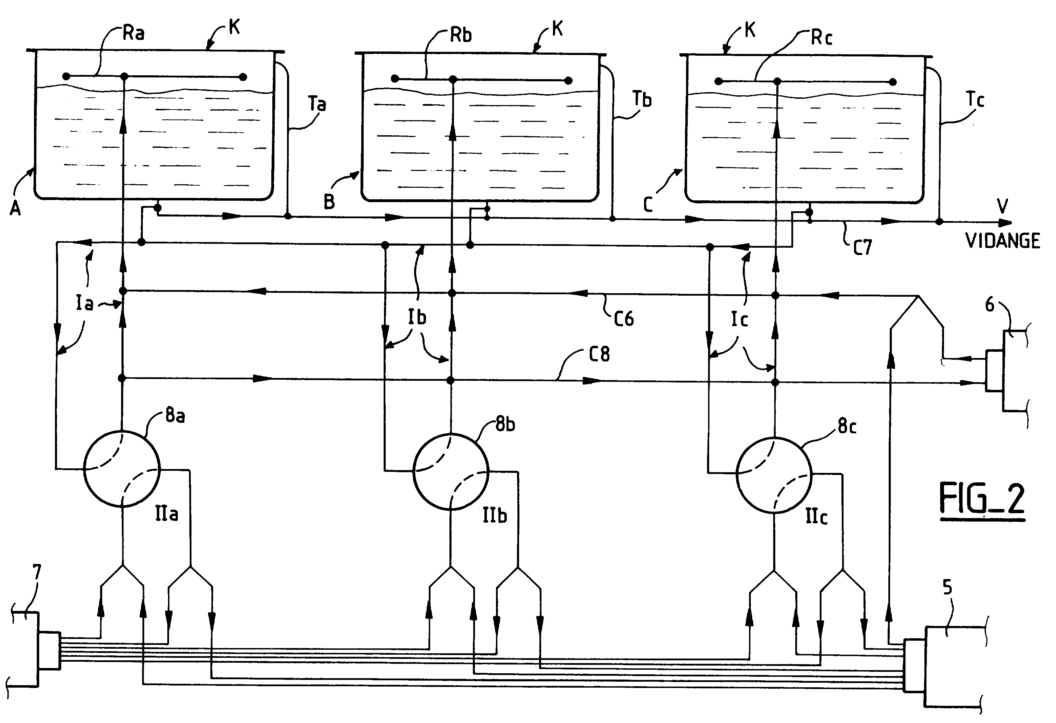

D'autres caractéristiques et avantages de l'invention ressortiront de la description qui suit, relative à des modes particuliers de réalisation, donnés à titre d'exemples non limitatifs en référence aux figures annexées qui représentent, respectivement:
- en figure 1, une installation conforme à l'invention mettant en oeuvre une cuve de cuisson ;
- en figure 2, une installation conforme à l'invention utilisant plusieurs cuves de cuisson raccordées.

L'installation représentée sur la figure 1 comprend :
- une cuve calorifugée 1, une canalisation 2 d'eau de cuisson chauffée à la température supérieure de 95°C et une canalisation 3 d'eau de stockage chauffée à 50°C, ces deux canalisations étant montées conjointement à l'aide d'une canalisation commune C4 montée à l'aide de deux raccords R1 et R2 sur un circuit en boucle I de recyclage de l'eau de cuisson de la cuve 1,
- un circuit de régulation II d'un échangeur thermique 8 couplé au circuit en boucle I, le circuit de régulation II étant alimenté par l'eau chauffée à 95°C ou par de l'eau glacée maintenue à une température inférieure, suivant l'ouverture modulée d'électrovannes EV1 et EV5, d'une part, et EV2 et EV8 d'autre part,
- trois cuves 5, 6 et 7 pour servir de sources à des températures prédéterminées, respectivement 95°C, 50°C et 3°C, soit au circuit en boucle I en ce qui concerne les cuves 5 et 6, soit au circuit de régulation II pour les cuves 5 et 7,
- des électrovannes EV1 à EV8, une pompe de brassage 9 et un détecteur de pression 10 disposés sur le circuit en boucle I, et
- des détecteurs de niveaux haut 11 et bas 12 ainsi qu'une sonde thermique 13 situés dans la cuve de cuisson 1.

Le sens de circulation de l'eau dans les canalisations et les circuits est indiqué par des flèches.

Les valeurs des températures utilisées dans cet exemple de réalisation sont fournies à titre d'exemples purement indicatifs, en particulier la température intermédiaire peut se situer dans la plage 30-85°C, préférentiellement 40-75°C.

L'eau chaude chauffée à 95°C dans la cuve 5 est destinée, d'une part, à la cuisson par le couplage au circuit en boucle I de recyclage de l'eau de cuisson et, d'autre part, au circuit de régulation II de l'échangeur thermique 8 à l'aide des canalisations C1 et C2 montées sur les raccords R3 et R4.

Le circuit de l'eau chauffée à 50°C de la cuve 6 est un circuit de cuisson et de stockage. Il comporte la canalisation 3 montée sur le circuit en boucle I de recyclage de l'eau de cuisson de la cuve 1, et une canalisation de stockage C3 de l'eau de cuisson vers la cuve 6 à partir d'un raccord R5 monté sur la canalisation commune C4 des canalisations d'alimentation 2 et 3 en eaux de cuisson.

L'alimentation modulée des eaux de cuisson à 50 et 95°C dans le circuit en boucle I circulant dans la cuve de cuisson 1 à l'aide des électrovannes EV3 et EV4, associée à une régulation obtenue à l'aide des eaux provenant des cuves d'eau maintenues à 95°C et à 3°C, permet une modulation fine en température, au degré près, pour cette cuve de cuisson.

Les cuves d'eau chaude 5 et 6 sont réglées en température par un brûleur à gaz associé à un échangeur de chaleur et à une sonde thermostatique (non représentée) ou par tout moyen connu de l'homme de l'art pour maintenir en température un fluide donné, par exemple par chauffage électrique thermostaté ou vapeur régulée.

Le circuit de régulation II est monté en circuit fermé d'une part sur la canalisation active hélicoïdale C5 de l'échangeur thermique 8 et, d'autre part, sur la cuve d'eau chauffée à 95°C et/ou sur la cuve d'eau glacée 7 suivant l'ouverture des électrovannes EV1, EV5, EV2 et EV8, pour servir respectivement de circuit de régulation ou de circuit de refroidissement. Pour maintenir l'eau à une température de +3° Celsius, le circuit de refroidissement comprend un groupe compresseur associé à un échangeur thermique et à une sonde thermostatique (non représentée) ou par tout moyen connu de l'homme de l'art pour maintenir un fluide à une température proche de 0°C.

La cuve de cuisson 1 comporte dans l'exemple de réalisation illustré une cuve métallique, par exemple en acier inoxydable, autour de laquelle est disposé un matériau isolant thermique. Elle est fermée à sa partie supérieure par un couvercle K de même structure. Une vanne de vidange manuelle V est disposée en sortie de la cuve de cuisson 1. La vidange est effectuée par connexion directe à l'égout en cas d'incident de cuisson.

Chaque cuve de réserve d'eau a une capacité d'environ 25% supérieure à la capacité de la (ou, dans le cas d'une réalisation à cuves multiples, de l'ensemble des) cuve de cuisson, dont la capacité est de 1500 litres dans l'exemple de réalisation.

L'installation comporte en outre des moyens de commande et de contrôle des processus de cuisson et de refroidissement, non représentés sur la figure. Les moyens de commande pilotent les moyens de contrôle, à savoir les électrovannes EV1 à EV5, des détecteurs de niveaux haut et bas, respectivement 11 et 12, situés dans la cuve de cuisson 1, une sonde de température 13, disposée également dans la cuve 1, la pompe de brassage 9 et le détecteur de pression 10 disposés sur le circuit en boucle I, plus précisément en sortie de la cuve de cuisson 1.

Les moyens de commande et de contrôle de l'installation assurent, en phase de préparation à la cuisson, l'admission de la quantité d'eau nécessaire à une température prédéterminée dans le circuit en boucle I de la cuve 1, à partir de l'eau des cuves d'eau chaude 5 et 6 et par ouverture des électrovannes et orientation des raccords, le maintien précis en température de l'eau de cuisson dans le circuit en boucle I aux températures prédéterminées en phase de cuisson, ainsi que la durée de la cuisson. Les moyens de commande sont indépendants de l'installation et regroupés dans une baie murale dans laquelle sont disposés les enregistreurs de température et des moyens d'alarme décrits plus loin.

De manière à automatiser entièrement l'installation, les moyens de commande et de contrôle sont gérés par des moyens de traitement informatique connectés à un microprocesseur. Les valeurs de paramètrage en température et en durée des paliers de cuisson et de refroidissement sont d'abord intégrées dans un logiciel adapté. En fonctionnement, les données provenant des moyens de contrôle sont fournies au microprocesseur via un convertisseur. Le microprocesseur élabore des signaux d'asservissement appliqués aux moyens de commande pour asservir l'installation aux valeurs de paramétrage prédéterminées.

Le procédé de cuisson selon l'invention suit l'ordre des étapes suivantes. Le chargement d'un panier contenant les produits sous vide dans la cuve de cuisson 1 est contrôlé par un détecteur de présence de panier. Après le chargement, les électrovannes EV3, EV4 et EV7 sont ouvertes afin de remplir la cuve de cuisson 1 avec un mélange d'eau chaude à 95° et à 50°C, dans des proportions correspondant à la température de cuisson souhaitée, par exemple à 60°C.

Au cours de la cuisson, la commande de ces électrovannes est également gérée en fonction du nombre de paliers intermédiaires correspondant à des températures données et de la durée de ces paliers. La pompe de brassage 9 est activée et la régulation en température est obtenue par échange thermique dans l'échangeur 8 par ouverture des électrovannes du circuit d'eau chaude à 95°C, EV2 et EV8, ainsi que celles du circuit d'eau glacée, EV1 et EV5.

La gestion informatisée permet alors d'obtenir une température de cuisson au degré près, garant d'une qualité de produit.

Les dispositifs de contrôle sont mis en alerte au début de chaque cycle de cuisson, correspondant à un palier de température : détecteur de présence de panier, détecteur de pression, détecteurs des niveaux haut et bas, sonde de température. Pour le chargement et le déchargement successif des paniers, il est prévu un pont roulant sur lequel un palan effectue le chargement et le déchargement des paniers.

Les dispositifs de contrôle permettent de pallier les problèmes pouvant survenir durant la cuisson. Par exemple en cas de percement de l'emballage des produits sous vide, le détecteur de pression 10 enregistre une variation de pression due au défaut de débit de la pompe 9. Cette détection provoque, via le système de commande centralisé, un arrêt de la pompe 9, puis la sortie du panier de la cuve de cuisson, suivie d'une vidange manuelle de la cuve de cuisson par ouverture de la vanne V, et d'un nettoyage de la cuve de cuisson avant le redémarrage d'un nouveau cycle.

Un autre problème peut résulter du débordement de la cuve de cuisson provoqué par le bouchage des crépines en fond de cuve. Dans ce cas, le détecteur de pression 10 envoie un signal de défaut de pression au système de commande, lequel provoque l'arrêt de l'électrovanne de remplissage EV7 et déclenche une alarme par un signal sonore et/ou lumineux, ainsi que l'arrêt du cycle de cuisson.

En fin de cuisson, le système de contrôle est programmé pour permettre un refroidissement progressif par palier. Un premier palier à la température de 50°C est obtenu :
- par évacuation de la cuve de cuisson de l'eau qu'elle contient vers la cuve 6, par fermeture de l'électrovanne de remplissage EV7 et par déclenchement de la pompe de brassage 9 et de l'électrovanne EV6. La détection du niveau bas de la cuve de cuisson, par le détecteur 12, provoque l'arrêt de la pompe de brassage 9,
- puis par remplissage de la cuve de cuisson 1 par ouverture des électrovannes EV3 et EV7 pour fournir de l'eau à 50° provenant de la cuve 6 ; la détection de niveau haut par le détecteur 11 provoque alors l'arrêt de l'électrovanne EV3 et l'ouverture de la pompe de brassage 9 et de l'électrovanne EV6 ; la cuve de cuisson est alors à 50°C.

La cuve est ensuite refroidie progressivement. Pour ce faire, l'ouverture des électrovannes EV1 et EV5 permet le raccordement du circuit d'eau glacée sur l'échangeur 8. L'eau de la cuve de cuisson 1 est refroidie dans l'échangeur 8 jusqu'à atteindre +3°C.

Après le refroidissement, l'évacuation des paniers est obtenue suite à une demande de vidange opérée sur l'armoire de contrôle ou par commande informatisée. La pompe 9 est alors déclenchée, l'électrovanne de remplissage EV7 est fermée ainsi que les électrovannes EV1, EV5, EV8 et EV2 des circuits de régulation de l'échangeur 8. L'électrovanne de retour EV6 est ouverte et le raccord R5 permet le stockage de l'eau vers la cuve 6 via une partie de la canalisation commune C4 et la canalisation C3. Après évacuation, un signal de fin de cycle lumineux et/ou sonore est déclenché sur l'armoire de contrôle

La détection de niveau bas de la cuve de cuisson déclenche l'arrêt de la pompe de brassage 9, et un voyant "cuve vide" apparaît sur l'armoire de contrôle. Le panier est alors évacué par le palan. Si le panier reste présent cinq minutes après la détection de "cuve vide", un signal lumineux et/ou sonore est déclenché pour dénoncer cette anomalie.

La figure 2 représente une installation à cuves multiples A, B et C, basée sur les mêmes caractéristiques que celles précédemment décrites. Des collecteurs adaptés sont mis en place afin d'optimiser l'organisation des phases de cuisson et de refroidissement réparties sur plusieurs cuves. Afin de ne pas surcharger la figure, les électrovannes n'ont pas été représentées. Cependant, leur implantation et leur fonctionnement se déduisent directement de leur emplacement sur la figure précédente et de leur fonctionnement décrit précédemment. L'homme du métier pourra optimiser leur nombre en fonction du nombre de cuves utilisées dans l'installation.

Dans le mode de réalisation à cuves multiples, chaque circuit de recyclage de cuve et chaque cuve sont équipés des mêmes moyens de contrôle que la cuve précédemment décrite, à savoir des détecteurs de niveaux haut et bas, une sonde de température, une pompe de brassage et un détecteur de pression. Ces moyens de contrôle n'ont pas non plus été représentés pour ne pas surcharger la figure.

Sur la figure 2, les éléments déjà décrits ont conservé les mêmes signes de référence, et des flèches indiquent le sens de déplacement de l'eau provenant des cuves d'eau chaude 5 et 6 ou de la cuve d'eau glacée 7.

En phase de remplissage et de cuisson, l'eau chaude provenant des cuves 5 et 6 via un collecteur C6 est recyclée en circuit fermé sur les cuves A, B et C, en suivant respectivement les circuits Iₐ, I_{b} et I_{c}. Ces derniers circuits traversent respectivement les échangeurs 8a, 8b 8c. Les circuits de régulation de ces échangeurs, respectivement IIₐ, II_{b} et II_{c} sont alimentés par l'eau des cuves 5 et 7 d'eau chaude à 95° C ou d'eau glacée proche de 0°C.

En sortie des cuves A, B et C, l'eau est soit recyclée dans les circuits fermés Iₐ, I_{b} et I_{c}, à l'aide de pompes de brassage (non représentées), soit orientée vers une vidange manuelle V à l'aide d'un collecteur commun C7. Des raccords de trop-plein Ta, Tb et Tc sont également prévus pour évacuer l'eau des cuves A, B et C, lorsque leur niveau atteint une valeur limite. Ces raccords sont reliés au collecteur de vidange C7.

Les circuits de recyclage, Iₐ, I_{b} et I_{c}, sont également raccordés à un collecteur d'évacuation C8 pour le stockage de l'eau vers la cuve 6, et permettre la mise en place d'un palier de refroidissement à 50°C, comme expliqué précédemment en référence à l'installation à cuve unique. Des conduites de remplissage Ra, Rb et Rc sont également représentées montées sur les canalisations des circuits de recyclage, respectivement Iₐ, I_{b} et I_{c}.

La gestion des trois cuves est réalisée par pilotage informatique à partir d'une baie d'acquisition et de transfert de données couplée par un convertisseur aux moyens de traitement informatique. Cette baie est reliée à des régulateurs de cuve qui reçoivent les données foumies par les détecteurs de niveau et de température, et qui transmets ces données à ladite baie.

L'utilisation des cuves peut être simultanée ou échelonnée, leur nombre pouvant être bien entendu supérieur à trois, par exemple égal à huit pour obtenir un bon compromis entre rendement et sécurité.

Dans ce mode de réalisation, les opérations de chargement et de déchargement des paniers sont entièrement automatisées. Les cuves peuvent être disposées en batterie deux par deux, ou quatre par quatre.

Dans une variante de réalisation, un régulateur-enregistreur supplémentaire peut être utilisé afin de conserver les données et de commuter en mode manuel en cas de défaillance du système informatique. Les données restent alors enregistrées cuve par cuve.

L'invention n'est pas limitée aux modes de réalisation décrits et représentés. Il est par exemple possible d'utiliser plus de deux sources chaudes, surtout pour une installation importante, par exemple de plus de huit cuves. Le nombre de pompes de brassage, de raccords et le type de moyens de contrôle utilisés reste à la portée de l'homme de l'art en vue d'optimiser l'installation en fonction, notamment du nombre de cuves de l'installation. L'installation à cuve unique peut être utilisée lorsque le nombre de cuves est faible, par exemple égal à deux, sans faire intervenir l'installation à collecteurs telle que décrite en référence à la figure 2.

Il est également possible d'utiliser un autre fluide que l'eau pour servir d'agent caloporteur ou réfrigérateur. D'autre part, les moyens de traitement informatiques peuvent être adaptés à l'installation, en multipliant par exemple le nombre de terminaux d'accès à la commande et au contrôle de l'installation.

## Revendications

1. Procédé de cuisson d'aliments sous vide pour cuisine centrale et industrie agro-alimentaire, comportant des étapes de chargement des aliments dans au moins une cuve de cuisson, de remplissage de la cuve par un fluide de cuisson, de cuisson et de refroidissement des aliments, suivies d'étapes d'évacuation du fluide et de déchargement des aliments cuits et refroidis, caractérisé en ce qu'il consiste à recycler en circuit fermé le fluide de cuisson provenant, suivant une modulation prédéterminée, d'au moins deux circuits délivrant ce fluide à des températures différentes dont l'une est une température supérieure et l'autre une température intermédiaire, à réaliser un échange de chaleur entre le fluide de cuisson et un fluide de régulation, en ce que le fluide de régulation provient, suivant une modulation prédéterminée, de deux circuits dont l'un fournit le fluide à une température inférieure et l'autre foumit le fluide à la température supérieure, en ce que le fluide de cuisson est contrôlé en température, en pression et en niveau, et en ce que les étapes de cuisson et de refroidissement sont commandées et contrôlées automatiquement par gestion informatique.

2. Procédé de cuisson selon la revendication 1, caractérisé en ce que, lorsque le nombre de cuves est égal à un, le nombre de circuits délivrant le fluide de cuisson est égal à deux, ces deux circuits se composant du circuit délivrant le fluide à la température supérieure et d'un circuit de stockage délivrant le fluide à la température intermédiaire entre la température supérieure et la température inférieure, et en ce que le fluide de cuisson est évacué par le circuit de stockage lors d'un palier de refroidissement de l'étape de refroidissement.

3. Installation de cuisson d'aliments sous vide pour cuisine centrale et industrie agro-alimentaire utilisant un fluide de cuisson et de refroidissement pour la mise en oeuvre de l'une des revendications précédentes, caractérisée en ce qu'elle comporte au moins une cuve de cuisson (1), un circuit en boucle (I) de recyclage du fluide cuisson, un échangeur (8) disposé sur ce circuit en boucle (I), une canalisation (2) de fluide de cuisson chauffée à la température supérieure et une canalisation (3) de fluide chauffée à la température intermédiaire, ces deux canalisations (2, 3) étant montées conjointement à l'aide d'une canalisation commune (C4) sur le circuit en boucle (I) de recyclage du fluide de cuisson de la cuve (1), en ce qu'un circuit de régulation (II) de l'échangeur thermique (8) est alimenté par le fluide de température supérieure et le fluide de température inférieure, en ce que cette alimentation est modulée suivant l'ouverture de moyens (EV1, EV5, EV2, EV8), en ce qu'au moins trois cuves (5, 6, 7) fournissent le fluide aux températures supérieure, intermédiaire, et inférieure prédéterminées au circuit en boucle (I) pour les cuves de température supérieure et intermédiaire (5, 6) par ouverture modulée de moyens (EV4, EV3, EV7) et au circuit de régulation (II) pour les cuves de température supérieure et inférieure (5, 7), et en ce qu'il est prévu des moyens de contrôle (9 à 13) dans le circuit de recyclage (I) et dans la cuve de cuisson (1) pour gérer la cuisson et le refroidissement des aliments sous vide.

4. Installation de cuisson selon la revendication 3, caractérisée en ce qu'il est prévu une canalisation d'évacuation (C3) du fluide de cuisson couplée à la canalisation commune (C4) par un raccord (R5) pour évacuer le fluide pendant un palier de refroidissement par fermeture des moyens d'alimentation et de recyclage du fluide de cuisson (EV3, EV4, EV7) et ouverture modulée de moyens d'évacuation (EV6), en ce que le circuit de régulation (II) est couplé aux cuves de température supérieure (5) et de température inférieure (7) par des canalisations raccordées (R3, R4), et en ce que les moyens de gestion informatiques sont couplés aux moyens de contrôle par l'intermédiaire de moyens de commande rassemblés et d'un convertisseur d'adaptation.

5. Installation de cuisson selon l'une des revendications 3 et 4, caractérisée en ce que le fluide est de l'eau, en ce que la température supérieure est sensiblement égale à 95°C, la température intermédiaire se situe sensiblement dans la plage 40-75°C et la température inférieure sensiblement égale à +3°C, et en ce que les moyens d'ouverture modulés sont des électrovannes (EV1 à EV8), et en ce qu'une pompe de brassage (9) et un détecteur de pression (10), disposés sur le circuit de recyclage (I), et des détecteurs de niveaux haut (11) et bas (12) ainsi qu'une sonde thermique (13) situés dans la cuve de cuisson (1), constituent les moyens de contrôle pour gérer la cuisson et le refroidissement des aliments sous vide.

6. Installation de cuisson selon la revendications 3, caractérisée en ce que, lorsque le nombre de cuve est multiple (A, B, C), l'installation comporte des collecteurs d'alimentation (C6) en fluide à température supérieure et intermédiaire à partir des cuves de température correspondante (5, 6), d'évacuation (C7) du fluide de cuisson vers la cuve de température intermédiaire (6), et de vidange (C7), les collecteurs d'alimentation (C6) et d'évacuation (C7) étant couplés aux circuits de recyclage (Iₐ, I_{b}, I_{c}) de chaque cuve (A, B, C), et en ce que les circuits de régulation (IIₐ, II_{b}, II_{c}) de chaque cuve (A, B, C) sont reliés de manière modulée à la cuve de température inférieure (7) et supérieure (5).

7. Installation de cuisson selon la revendications 6, caractérisée en ce que les moyens de gestion informatisés sont reliés aux moyens de commande par l'intermédiaire d'un régulateur-enregistreur supplémentaire afin de conserver les données et de commuter en mode manuel en cas de défailiance du système informatique.

8. Installation de cuisson selon les revendications 5, 6, 7 caractérisée en ce que les moyens de chargement et déchargement sont entièrement automatisés.
